# EUROPÄISCHE PATENTSCHRIFT

(11) **EP 1 051 277 B1**
(45) Veröffentlichungstag und Bekanntmachung des Hinweises auf die Patenterteilung: **03.03.2004**
(21) Anmeldenummer: 99950614.0
(22) Anmeldetag: 05.10.1999
(51) Int. Cl.: B23G 1/04, B23B 29/24

(54) **GEWINDESCHNEIDVORRICHTUNG**
THREADING DEVICE
DISPOSITIF DE FILETAGE

(30) Priorität: 06.10.1998 DE 19845948
(43) Veröffentlichungstag der Anmeldung: 15.11.2000
(73) Patentinhaber: Anvil International, Inc., Portsmouth, NH 03801 (US)
(72) Erfinder: SCHRÖDER, Ewald, D-33758 Schloss Holte-Stukenbrock (DE)
(74) Vertreter: Thielking, Bodo, Dipl.-Ing.
(86) Internationale Anmeldenummer: PCT/EP1999/007355
(87) Internationale Veröffentlichungsnummer: WO 2000/020153

(56) Entgegenhaltungen:
- EP-A- 0 593 222
- DE-A- 3 237 587
- DE-A- 19 500 515
- FR-A- 2 175 776
- US-A- 4 438 539

## Beschreibung

### TECHNISCHES GEBIET

Die Erfindung betrifft eine Gewindeschneidvorrichtung nach dem Oberbegriff des Patentanspruchs 1.

### STAND DER TECHNIK

Bei einer bekannten Gewindeschneidvorrichtung dieser Art (DE 44 28 049 A1) sind an einem axial verschieblich geführten Antriebsring mehrere über dessen Umfang verteilte Zahnstangen befestigt, die jeweils eine radial einwärts gerichtete Schrägverzahnung aufweisen. Die Schrägverzahnung steht mit einer korrespondierenden Schrägverzahnung von Übertragungselementen im Eingriff, welche jeweils gleichzeitig zwei Werkzeugschieber gegenläufig betätigen. Der Antrieb über einen axial verschieblich geführten Antriebsring hat einerseits den Nachteil, daß die Zahnstangen einen relativ großen Abstand von der Rotationsachse aufweisen. Dies erzeugt ein großes Bauvolumen des Gewindeschneidkopfes. Andererseits führt die nur stirnseitige Befestigung der Zahnstangen an einem flanschartigen Ring dazu, daß der Antrieb für die Werkzeugschieber nicht eine in allen Fällen ausreichende Steifigkeit besitzt. Dies kann zu Ungenauigkeiten in der Werkstückbearbeitung führen.

Auch bei einer weiteren bekannten Lösung (US 2,093,506) erfolgt der Antrieb über ein hülsenförmiges Organ, das von einer Hohlwelle gedreht wird, deren Mittelachse mit der Rotationsachse zusammenfällt, und das mittels eines von außen angreifenden Handhebels in axialer Richtung verschieblich ist. Bei der axialen Verschiebung werden die Werkzeugschieber in radialer Richtung auf die Rotationsachse zugestellt.

Auch bei dieser bekannten Lösung ist es nicht möglich, die Zustellbewegung mittels eines zentralen Antriebsorgans zu bewirken.

Bei einer weiteren bekannten Gewindeschneidvorrichtung (DE-A-32 37 587) ist eine in Drehachsenrichtung verlaufende Antriebsstange mit zwei diametral gegenüberliegend angeordneten Zahnstangenbereichen vorgesehen. Jeder dieser Zahnstangenbereiche kämmt mit einem Ritzel, das mit einer Zahnstange auf der Rückseite jeweils eines Schiebers kämmt. Die beiden Schieber sind seitlich von der Drehachse und parallel zueinander verschieblich angeordnet. Jeder Werkzeugschieber trägt jeweils zwei Werkzeuge.

Bei einer weiteren Gewindeschneidvorrichtung (DE-A-195 00 515), deren Aufbau demjenigen der eingangs erwähnten sehr ähnlich ist, erfolgt ebenfalls ein Antrieb über einen axial geführten Antriebsring.

Schließlich ist auch einen Gewindeschneidvorrichtung bekannt (FR-A-2 175 776), bei der ein gedrehtes Rohr, dessen Vorschub beispielsweise hydraulisch gesteuert wird, einen Führungsring trägt, der Führungsnuten aufweist, die senkrecht zur Drehachse des Rohres verlaufen. Es sind Zwischenelemente vorgesehen, die an Werkzeugträgern angreifen. Die Zwischenelemente werden über Längsnuten und Führungsnuten so geführt, daß die Werkzeuge zentral einwärts verfahrbar sind.

### DIE ERFINDUNG

Ausgehend von diesem Stand der Technik liegt der Erfindung die Aufgabe zugrunde, eine kompakt aufgebaute Gewindeschneidvorrichtung zu schaffen, die bei großer Produktionsleistung eine hohe Bearbeitungsgenauigkeit erreicht, bei der die Zustellung der Werkzeugschieber mittels eines zentral angeordneten Antriebsorgans möglich ist.
Die Lösung dieser Aufgabe erfolgt mit den Merkmalen des Patentanspruchs 1.

Die erfindungsgemäße Ausbildung ermöglicht eine kompakte und sehr steife Bauweise der. Gewindeschneidvorrichtung, so daß die radiale, gesteuerte Verstellung der Werkzeuge sehr genau und deren Führung besonders schwingungsarm erfolgen kann. Die erfindungsgemäße Ausbildung ermöglicht es, gleichzeitig Gewindeschneidwerkzeuge und Dreh- oder Schälwerkzeuge sowie kombinierte Werkzeuge aus Hartmetall an dem jeweils bearbeiteten Werkstück einzusetzen.

Bei einer besonders bevorzugten Ausführungsform erfolgt die Übertragung der Axialbewegung des Antriebsorgans unmittelbar auf die radial beweglich geführten Werkzeugschieber. Hierdurch wird die Zahl der Teile, und damit der Herstellungsaufwand gegenüber dem Stand der Technik verringert, und gleichzeitig eine erhöhte Genauigkeit erzeugt.

Bevorzugte weitere Ausgestaltungen der Erfindung ergeben sich aus den Unteransprüchen.

### KURZBESCHREIBUNG DER ZEICHNUNGSABBILDUNG

Nachstehend werden zwei bevorzugte Ausführungsformen anhand der Zeichnungen im einzelnen erläutert. Es zeigen:
- Figur 1 -: eine teilweise geschnittene Seitenansicht einer Gewindeschneidvorrichtung mit dem Antrieb für den Radialvorschub der Werkzeugschieber;
- Figur 2 -: eine perspektivische Explosionsdarstellung einer ersten Ausführungsform der Gewindeschneidvorrichtung;
- Figur 3 -: einen Teilbereich der Gewindeschneidvorrichtung gemäß Figur 2 in perspektivisch dargestellter Zusammenbaulage;
- Figur 4 -: eine perspektivische Explosionsdarstellung eines Teilbereichs einer zweiten Ausführung, die ein Antriebsorgan und einen von mehreren Werkzeugschiebern zeigt;

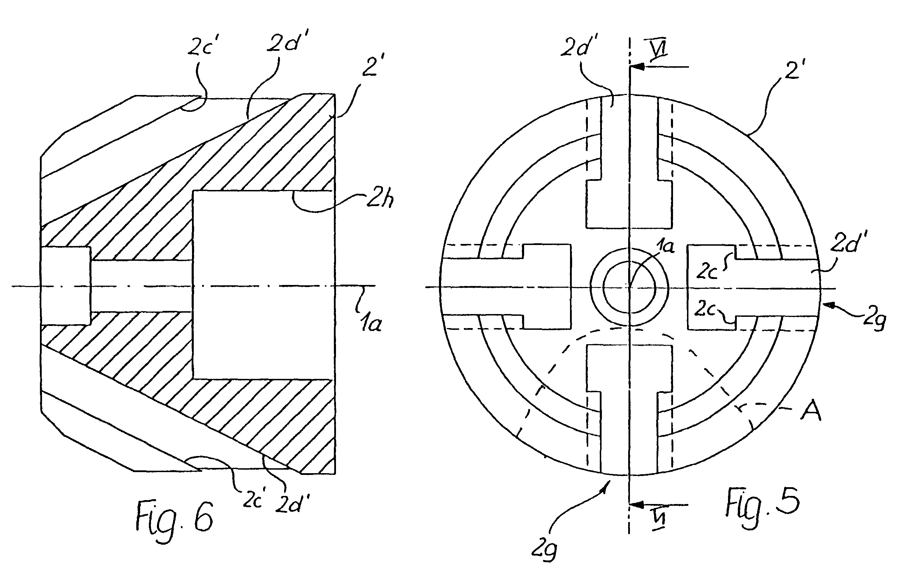

- Figur 5 -: eine Frontansicht in Richtung des Pfeils V in Fig. 4;
- Figur 6 -: eine Schnitt durch das Antriebsorgan nach Fig. 4 und 5 entlang der Schnittebene VI - VI in Fig. 5.
- Figur 7 -: einen Teilbereich des Antriebsorgans gemäß Ausschnitt A in Fig. 5 im Querschnitt, mit einer Ausbildung der Führung des Werkzeugschiebers als Flachführung;
- Figur 8 -: einen Teilbereich des Antriebsorgans gemäß Ausschnitt A in Fig. 5 im Querschnitt, mit einer Ausbildung der Führung des Werkzeugschieber als Rundführung;
- Figur 9 -: einen Teilbereich des Antriebsorgans gemäß Ausschnitt A in Fig. 5 im Querschnitt, mit einer Ausbildung der Führung des Werkzeugschiebers als Schwalbenschwanzführung;
- Figur 10 -: eine perspektivische Explosionsdarstellung der zweiten, in Fig. 4 dargestellten Ausführung, welche den Werkzeugschieber ebenfalls in Explosionsdarstellung zeigt;
- Figur 11 -: einen Teilbereich eines kombinierten Schäl- und Gewindeschneidwerkzeugs aus Hartmetall.

### BESTER WEG ZUR AUSFÜHRUNG DER ERFINDUNG

In den Zeichnungen sind gleiche oder einander entsprechende Teile jeweils mit gleichen Bezugszeichen versehen. Sie unterscheiden sich im Bedarfsfall durch Hochstriche voneinander.

Die Gewindeschneidvorrichtung besteht im wesentlichen aus einem Gewindeschneidkopf 1 und einem Antriebsorgan, das mit gleicher Geschwindigkeit wie der Gewindeschneidkopf 1 um eine Rotationsachse 1a dreht. Durch die in Rotationsachsenrichtung erfolgende Relativbewegung zwischen Gewindeschneidkopf und Antriebsorgan werden Werkzeugschieber, welche die Werkzeuge tragen, radial einwärts bzw. auswärts verfahren.

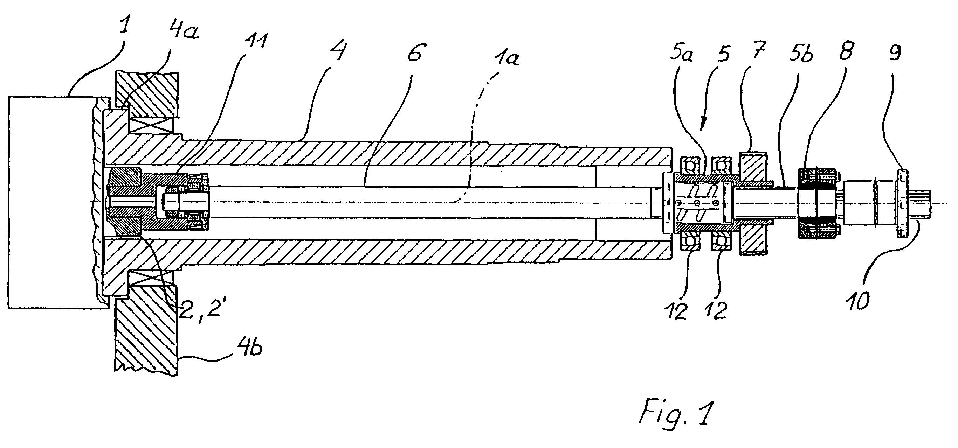

Ein beispielhafter Gesamtaufbau ist in Figur 1 dargestellt.

Der nur mit seinem Außenumfang dargestellte Gewindeschneidkopf 1 ist an dem Spindelflansch 4a einer Werkzeugspindel 4 befestigt. Die Werkzeugspindel 4 und der Gewindeschneidkopf 1 drehen sich um eine gemeinsame Rotationsachse 1a. Die Werkzeugspindel 4 ist in einem Gehäuse 4b gelagert, von dem nur ein Teil der Stirnwand dargestellt ist. Das Gehäuse 4b ist gemeinsam mit der Werkzeugspindel 4 und dem Gewindeschneidkopf 1 in Richtung der Rotationsachse 1a verfahrbar. Die Werkzeugspindel 4 wird von einer nicht rotierenden, jedoch relativ zur Werkzeugspindel 4 längsverschieblichen Zugstange 6 durchsetzt. Um den Längsvorschub von der nicht rotierenden Zugstange 6 auf das rotierende Antriebsorgan 2 bzw. 2' zu übertragen, ist zwischen Antriebsorgan 2 bzw. 2' und der Zugstange 6 eine Mitnehmerkupplung 11 angeordnet.

In dem Gehäuse 4b ist die mit dem Gehäuse 4b verfahrbare Spindelmutter 5a eines Mutter-Gewindetriebs 5 mit Kugellagern 12 drehbar gelagert. Die Spindelmutter wird über einen Zahnriementrieb 7 von einem nicht dargestellten, numerisch gesteuerten Motor angetrieben. Die Spindelmutter 5a greift in eine Kugelgewindespindel 5b ein. Die Rotation der Spindelmutter 5a auf der undrehbar gehaltenen Kugelgewindespindel 5b bewirkt eine Verschiebung der Kugelgewindespindel 5b und der einstückig mit ihr ausgebildeten Zugstange 6 relativ zur Werkzeugspindel 4 und zum Gewindeschneidkopf 1 in Richtung der Rotationsachse 1a. Die Kugelgewindespindel 5b ist durch eine Ausgleichskupplung 8 mit einer Vielkeilwelle 10 verbunden, die mit einem Flansch 9 axialverschieblich jedoch undrehbar gehalten wird. Dadurch können die Gewindespindel 5b und die Zugstange 6 nicht rotieren, sich jedoch in Längsrichtung der Werkzeugspindel 4 und relativ dazu verschieben.

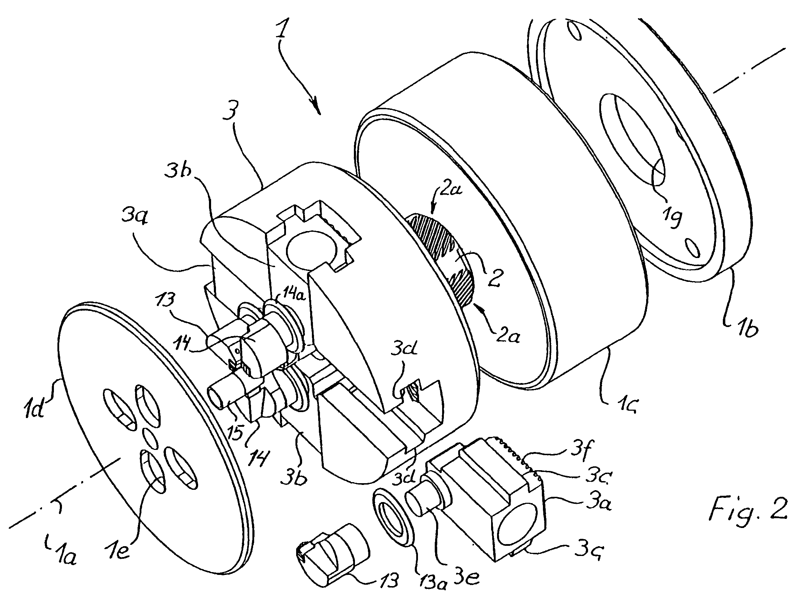

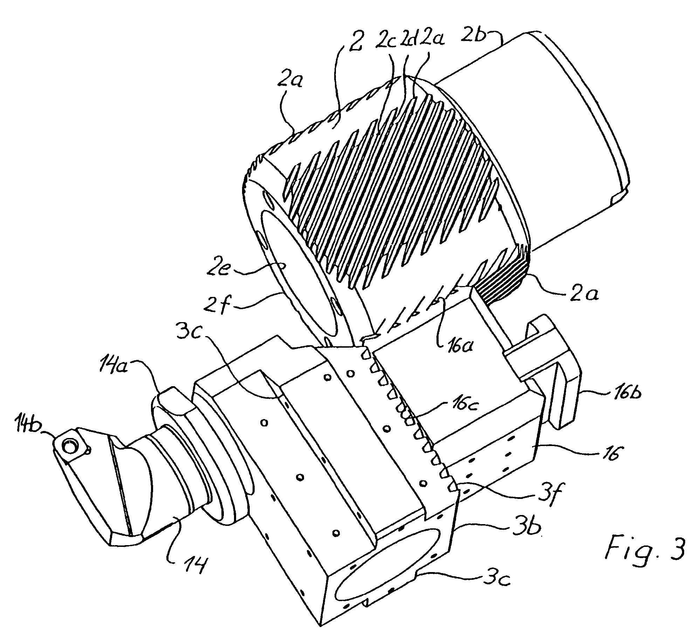

Eine erste Ausführungsform der Gewindeschneidvorrichtung mit einer mittelbaren Umsetzung der Längsverschiebung des Antriebsorgans 2 in eine Radialverschiebung der Werkzeugschieber 3a und 3b wird anhand der Fig. 2 und 3 nachfolgend beschrieben.

Ein Befestigungsflansch 1b dient zur Befestigung des Gewindeschneidkopfes 1 an dem Spindelflansch 4a der Werkzeugspindel 4. An den Befestigungsflanch 1b schließt ein Grundkörper 1c an, der das Antriebsorgan 2 überdeckt und einen Werkzeugführungskörper 3 drehfest mit dem Befestigungsflansch 1b verbindet. Die Stirnseite des Werkzeugführungskörpers 3 wird durch eine Deckplatte 1d abgedeckt, die Langlöcher 1e aufweist, durch die Werkzeugschieber 3a und 3b mit ihren Frontbereichen hindurchtreten.

In dem Werkzeugführungskörper 3 sind vier Werkzeugschieber 3a und 3b unter 90° zueinander versetzt und radial verschieblich angeordnet. Die Werkzeugschieber 3a und 3b besitzen seitliche Führungsstege 3g, die in Führungsnuten 3d im Werkzeugführungskörper 3 geführt sind. Zur Befestigung von Werkzeughaltern 13 für Gewindeschneidwerkzeuge 13b bzw. von Werkzeughaltern 14 für Dreh- bzw. Schälwerkzeuge 14b an den Werkzeugschiebern 3a bzw. 3b sind diese Werkzeugschieber jeweils mit Spannzapfen 3e versehen. Zwischen den Werkzeugschiebern 3a und den Werkzeughaltern 13 bzw. zwischen den Werkzeugschiebern 3b und den Werkzeughaltern 14 sind Distanzscheiben 13a bzw. 14a auf die Spannzapfen 3e aufgeschoben, die den Spannbereich des Spannbolzens 3e vor Spänen und Kühlflüssigkeit schützen und die Auskraglänge der Gewindeschneidwerkzeuge 13b und der Drehwerkzeuge 14b festlegen.

Die Schneiden der Drehwerkzeuge 14b sind in Bearbeitungsrichtung vor den Schneiden der Gewindeschneidwerkzeuge 13b angeordnet. Die Schneiden der auf gegenüberliegenden Werkzeugschiebern 3b angeordneten Drehwerkzeuge 14b sind in Bearbeitungsrichtung gegeneinander um die Spantiefe versetzt.

Die Schneiden der ebenfalls auf gegenüberliegenden Werkzeugschiebern 3a befestigten Gewindeschneidwerkzeuge 13b sind um die halbe Gewindesteigung in Bearbeitungsrichtung gegeneinander versetzt. Alle Werkzeuge 13b und 14b bearbeiten gleichzeitig das in nicht dargestellter Weise undrehbar und unverschieblich gehaltene Werkstück 15, dessen Mittelachse mit der Rotationsachse 1a fluchtet.

Die Umwandlung der Längsbewegung des Antriebsorgans 2 in eine Radialbewegung der Werkzeugschieber 3a und 3b erfolgt mit Hilfe von vier Übertragungselementen 16 (Fig. 3). Jedes Übertragungselement 16 hat im wesentlichen kubische Gestalt und ist an zwei einander benachbarten Flächen mit Schrägverzahnungen 16 a und 16 c versehen. Die Schrägverzahnungen können unterschiedliche Zahnformen aufweisen und aus jeweils einem oder mehreren Zähnen bestehen. Das Antriebsorgan 2 des Gewindeschneidkopfes 1 trägt auf vier um jeweils 90° zueinander versetzten Seiten auf einem gemeinsamen Mittelbereich 2f angeordnete Schrägverzahnungen 2a, die mit den Schrägverzahnungen 16a der Übertragungselemente 16 kämmen. Die Zahnflanken der Schrägverzahnung 2a bilden erste Führungsflächen 2c für die radiale Zustellung der Werkzeugschieber 3a und 3b, während die gegenüberliegenden Zahnflanken zweite Führungsflächen 2d zum Zurückziehen der Werkzeugschieber 3a und 3b bilden. Die anliegenden Zahnflanken der Schrägverzahnungen 16a bilden Gegenflächen zu den Führungsflächen 2c und 2d.

Das Antriebsorgan 2 besitzt eine angeformte Hülse 2b, mit der es über die Mitnehmerkupplung 11 drehbar an der Zugstange 6 befestigt ist. Eine zentrale Bohrung 2e im Antriebsorgan 2 erlaubt das Eintauchen langer Werkstücke 15 während der Bearbeitung.

Die Übertragungselemente 16 sind mit einem T-fömigen Führungsstück 16b verschraubt, das die Übertragungselemente 16 tangential verschieblich zum Antriebsorgan 2 im Werkzeugaufnahmekörper 3 führt. An der den Werkzeugschiebern 3a und 3b gegenüberliegenden Fläche trägt das Übertragungselement 16 die Schrägverzahnung 16c, die mit der Schrägverzahnung 3f der Werkzeugschieber 3a und 3b kämmt. Die Schrägverzahnungen 16a und 16c sind auf benachbarten und rechtwinklig zueinander verlaufenden Flächen des kubischen Übertragungselements 16 angeordnet.

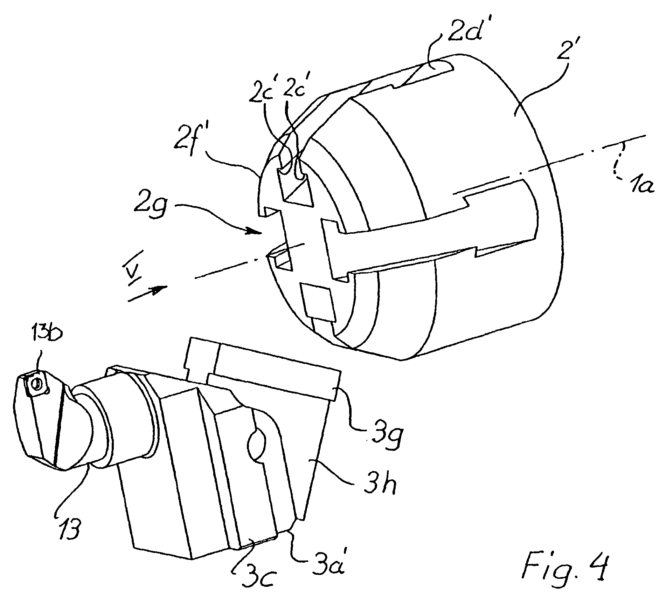

Nachstehend wird eine zweite Ausführungsform eines Gewindeschneidkopfes beschrieben. In Fig. 4 sind die maßgeblichen Elemente dargestellt, in denen sich die zweite Ausführungsform im wesentlichen von der ersten unterscheidet. Bei dieser zweiten Ausführungsform wird die relative Axialbewegung zwischen Antriebsorgan 2' und Gewindeschneidkopf 1 direkt in eine radiale Bewegung der Werkzeugschieber 3a' umgesetzt.

Das Antriebsorgan 2' des Gewindeschneidkopfes 1 weist erste Führungsflächen 2c' und zweite Führungsflächen 2d' an T-nutenförmigen Flachführungen 2g auf, die rings um einen Mittelbereich 2f' gleichmäßig am Umfang verteilt und schräg nach außen ansteigend im Antriebsorgan 2' verlaufen. Im Antriebskörper 2' sind vier Flachführungen angeordnet, von denen jeweils zwei Flachführungen 2g einander gegenüberliegen. Die Flachführungen 2g sind unter 90° zueinander versetzt angeordnet.

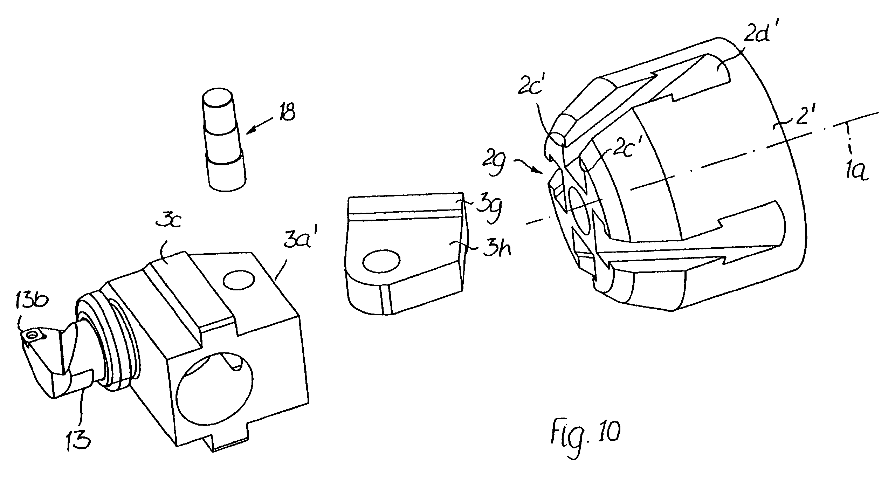

In den Flachführungen 2g sind im Profil passend ausgebildete Führungskörper 3g verschieblich gelagert, die die Gegenflächen zu den Führungsflächen 2c' und 2d' tragen. Jeder Führungskörper 3g ist über einen Steg 3h mittels eines Exzenterbolzens 18 (vgl. Fig. 10) mit einem Werkzeugschieber 3a' verbunden. Der Werkzeugschieber 3a' ist mit seitlichen Führungsstegen 3c im Gewindeschneidkopf 1 radial verschieblich geführt ist. Durch das Vorsehen eines Exzenterbolzens 18 zwischen dem Werkzeugschieber 3a' und dem Steg 3h ist jedes Werkzeug fein einstellbar.

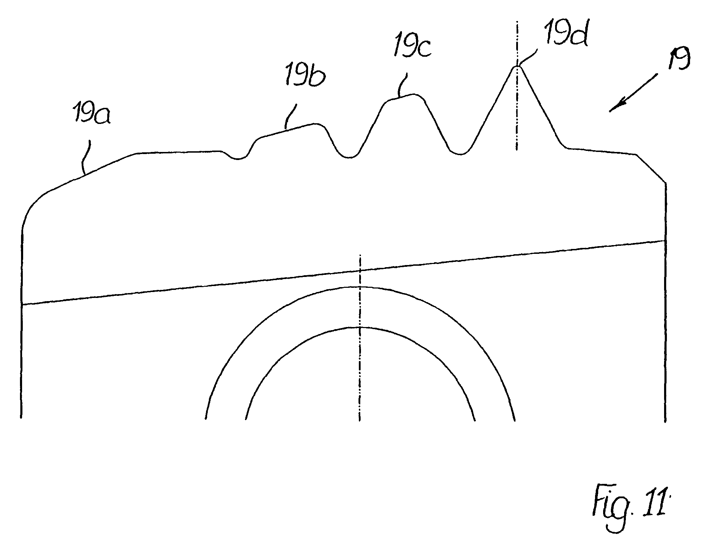

Statt der getrennt ausgebildeten Dreh- und Schälwerkzeuge 14b bzw. der Gewindeschneidwerkzeuge 13b können auch kombinierte Werkzeuge aus Hartmetall verwendet werden, wie sie in Fig. 11 mit 19 bezeichnet sind. An derartigen kombinierten Werkzeugen 19 ist auf der Frontseite eine Schälschneide 19a vorgesehen. An die Schälschneide 19a schließen sich zwei Vorschneidebereiche 19b und 19c an, hinter denen der Fertigschneidebereich 19d liegt.

Das Verschieben des Antriebsorgans 2' in Bearbeitungsrichtung führt zu einer radial auswärts gerichteten Bewegung der Werkzeugschieber. Das Verschieben des Antriebsorgans 2' entgegen der Bearbeitungsrichtung bewegt die Werkzeugschieber 3' radial in Richtung auf das Werkstück 15 zu.

Der Führungskörper 2' weist eine gestufte Befestigungsbohrung 2h auf, die einen Absatz der Mitnehmerkupplung 11 aufnimmt.

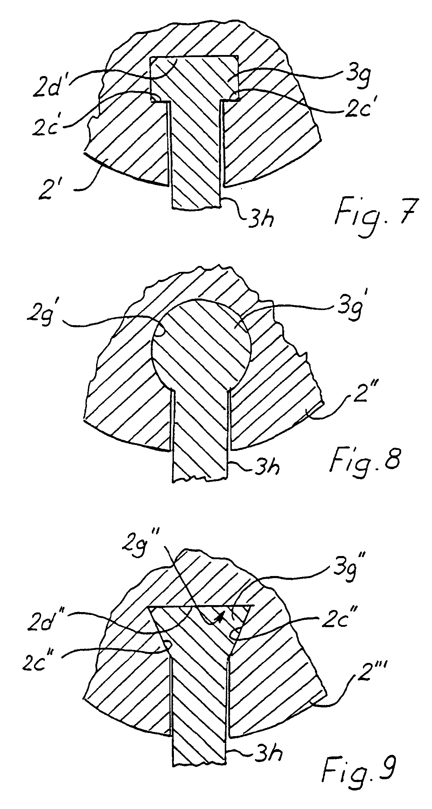

Die Führungsflächen und Führungskörper können zur Umwandlung der Längsbewegung des Antriebsorgans unterschiedliche Gestalt aufweisen. Bevorzugte Ausführungsformen der Führungsflächen sind für unterschiedliche Führungskörper 3g, 3g' und 3g" in den in Figuren 7 bis 9 dargestellten Teilausschnitten veranschaulicht.

Neben der Flachführung 2g eignen sich Rundführungen 2g' und Schwalbenschwanzführungen 2g" zur Aufnahme der Führungskörper 3g, 3g' und 3g". Die Führungsflächen werden dabei durch Bereiche der geschlitzten Rundführungen 2g' in dem Antriebsorgan 2" gebildet. Bei der Schwalbenschwanzführung 2g" in dem Antriebsorgan 2"' wirken die zueinander geneigten Seitenflächen als erste Führungsflächen 2c" und die verbreiterte Basisfläche als zweite Führungsfläche 2d".

Durch die paarweise Anordnung der Werkzeugschieber 3a, 3a' und 3b an dem Werkzeugkopf 1 heben sich die auf die Werkzeuge 13 und 14 wirkenden Passivkräfte im Gewindeschneidkopf 1 gegenseitig weitgehend auf, so das die Lagerung der Werkzeugspindel 4 in radialer Richtung praktisch nicht belastet wird und sich eine hohe Bearbeitungsgenauigkeit ergibt.

## Patentansprüche

1. Gewindeschneidvorrichtung mit einem rotierend und in Richtung der Rotationsachse (1a) verschieblich antreibbaren Gewindeschneidkopf (1), der vier paarweise einander gegenüberliegend angeordnete und radial zur Rotationsachse (1a) verschieblich geführte Werkzeugschieber (3a; 3a', 3b) aufweist, die Werkzeuge tragen, mit einem in Richtung der Rotationsachse (1a) verschieblichen und mit dem Gewindeschneidkopf (1) umlaufenden Antriebsorgan (2; 2'), dessen Relativbewegung gegenüber dem Gewindeschneidkopf (1) in Richtung der Rotationsachse (1a) zu einer Radialbewegung der Werkzeugschieber (3a; 3b) führt und das erste Führungsflächen (2c; 2c') für die Führung der Werkzeugschieber (3a; 3a'; 3b) in einer ersten Richtung sowie hierzu parallel verlaufende, diesen gegenüberliegende zweite Führungsflächen (2d; 2d') für die Führung der Werkzeugschieber (3a; 3a'; 3b) in Gegenrichtung aufweist,
**dadurch gekennzeichnet,**
**daß** das Antriebsorgan (2; 2') einen zentralen Mittelbereich (2f; 2f') aufweist sowie daran angeordnete, radial auswärts gerichtete Führungsflächen (2c; 2c'; 2d; 2d'), welche mit einwärts gerichteten Gegenflächen in Eingriff stehen, über die die Bewegung des Antriebsorgans (2; 2') mittelbar oder unmittelbar auf die radial beweglich geführten Werkzeugschieber (3a; 3a'; 3b) übertragen wird.

2. Gewindeschneidvorrichtung nach Anspruch 1,
**dadurch gekennzeichnet,**
**daß** die auswärts gerichteten Führungsflächen (2c; 2d) in einer zur Rotationsachse (1a) parallelen Ebene unter einem Winkel schräg zur Rotationsachse (1a) verlaufen.

3. Gewindeschneidvorrichtung nach Anspruch 1,
**dadurch gekennzeichnet,**
**daß** die auswärts gerichteten Führungsflächen (2d') schräg geneigt zur Rotationsachse (1a) verlaufen.

4. Gewindeschneidvorrichtung nach einem der Ansprüche 1 bis 3,
**dadurch gekennzeichnet,**
**daß** die ersten Führungsflächen (2c') und die zweiten Führungsflächen (2d') von den Flächen einer T-förmigen Flachführung (2g) gebildet sind, die einen mit dem Werkzeugschieber (3a') verbundenen im Querschnitt rechteckigen Führungskörper (3g) umgreifen.

5. Gewindeschneidvorrichtung nach einem der Ansprüche 1 bis 4,
**dadurch gekennzeichnet,**
**daß** die ersten Führungsflächen und die zweiten Führungsflächen durch Bereiche einer Rundführung (2g') gebildet sind, deren stangenförmiger Führungskörper (3g') mit dem Werkzeugschieber (3a') verbunden ist.

6. Gewindeschneidvorrichtung nach einem der Ansprüche 1 bis 5,
**dadurch gekennzeichnet,**
**daß** die ersten Führungsflächen (2c") und die zweiten Führungsflächen (2d") durch die Flächen einer Schwalbenschwanzführung (2g") gebildet sind, deren Führungskörper (3g") mit dem Werkzeugschieber (3a') verbunden ist.

7. Gewindeschneidvorrichtung nach einem der Ansprüche 1 bis 6,
**dadurch gekennzeichnet,**
**daß** die ersten Führungsflächen (2c) und die zweiten Führungsflächen (2d) von den einander gegenüberliegenden Flanken einer Schrägyerzahnung (2a) an der Außenseite des Antriebsorgans (2) gebildet sind.

8. Gewindeschneidvorrichtung nach Anspruch 7,
**dadurch gekennzeichnet,**
**daß** das zentrale Antriebsorgan (2) auf paarweise gegenüberliegenden Außenseiten mit Schrägverzahnungen (2a) versehen ist, die in die Verzahnung (16a) tangential zur Werkzeugumlaufbahn im Gewindeschneidkopf (1) verschieblicher Übertragungselemente (16) eingreifen, wobei die Übertragungselemente (16) weitere, den Werkzeugschiebern (3a; 3b) gegenüberliegende Schrägverzahnungen (16c) aufweisen, die in korrespondierende Verzahnungen (3f) an den Werkzeugschiebern (3a; 3b) eingreifen.

9. Gewindeschneidvorrichtung nach einem der Ansprüche 1 bis 8,
**dadurch gekennzeichnet,**
**daß** die an den Werkzeugschiebern (3a; 3b) befestigten Werkzeuge ein- oder mehrschneidige Gewindeschneidwerkzeuge (13) und Dreh- oder Schälwerkzeuge (14) sind.

10. Gewindeschneidvorrichtung nach einem der Ansprüche 1 bis 9,
**dadurch gekennzeichnet,**
**daß** jeweils diametral auf unterschiedlichen Seiten der Rotationsachse (1a) einander gegenüberliegende Werkzeugschieber (3a bzw 3b) angeordnet sind, die gleichartige Werkzeuge tragen, wobei die mit Gewindeschneidwerkzeugen (13) bestückten Werkzeugschieber (3a) zu den mit Dreh- oder Schälwerkzeugen (14) bestückten Werkzeugschiebern (3b) benachbart und in Richtung der Rotationsachse (1a) versetzt angeordnet sind, und daß die Schneiden der Dreh- oder Schälwerkzeuge (14) in Bearbeitungsrichtung vor den Schneiden der Gewindeschneidwerkzeuge (13) liegen.

11. Gewindeschneidvorrichtung nach einem der Ansprüche 1 bis 10,
**dadurch gekennzeichnet,**
**daß** die Werkzeugschieber (3a; 3a'; 3b) kombinierte Schäl- und Gewindeschneidwerkzeuge (19) tragen.

12. Gewindeschneidvorrichtung nach einem der Ansprüche 1 bis 11,
**dadurch gekennzeichnet,**
**daß** das zentrale Antriebsorgan (2) eine zentrale Bohrung (2e) aufweist.

13. Gewindeschneidvorrichtung nach einem der Ansprüche 1 bis 10,
**dadurch gekennzeichnet,**
**daß** das zentrale Antriebsorgan (2) mittels eines rotierend antreibbaren Mutter-Gewindetriebs (5) axial verschieblich ist, der zum Betätigen einer Zugstange (6) ausgebildet ist, die in einer den Gewindeschneidkopf (1) tragenden Werkzeugspindel (4) angeordnet ist.

14. Gewindeschneidvorrichtung nach einem der Ansprüche 1 bis 13,
**dadurch gekennzeichnet,**
**daß** der das Werkzeug (13b; 14b; 19) tragende Bereich jedes Werkzeugschiebers (3a; 3a'; 3b) gegenüber dessen Führungsbereich verstellbar ist.

15. Gewindeschneidvorrichtung nach Anspruch 14,
**dadurch gekennzeichnet,**
**daß** der das Werkzeug (13b; 14b; 19) tragende Bereich des Werkzeugschiebers (3a; 3a'; 3b) mittels eines diese Bereiche verbindenden Exzenterbolzens (18) verstellbar ist.

## Claims

1. Thread cutting device with a thread cutting head (1) which can be driven in rotation and is displaceable in the direction of the rotational axis (1a) and which has four tool slides (3a; 3a', 3b) arranged in pairs opposite one another and guided displaceable radially relative to the axis of rotation (1a), with the tool slides supporting tools, with a drive member (2; 2') displaceable in the direction of the rotational axis (1a) and revolving with the thread cutting head (1) whereby the relative movement of the drive member in relation to the thread cutting head (1) in the direction of the rotational axis (1a) leads to a radial movement of the tool slide (3a, 3b), and which has first guide faces (2c, 2c') for guiding the tool slide (3a, 3a', 3b) in a first direction as well as second guide faces (2d, 2d') opposite these and running parallel thereto for guiding the tool slide (3a, 3a', 3b) in the counter direction,
**characterised in that**
the drive member (2, 2') has a central middle area (2f, 2f') as well as radially outwardly aligned guide faces (2c, 2c', 2d, 2d') mounted thereon to engage with inwardly directed counter faces through which the movement of the drive member (2, 2') is transferred directly or indirectly to the radially movably guided tool slide (3a, 3a', 3b).

2. Thread cutting device according to claim 1,
**characterised in that**
the outwardly directed guide faces (2c, 2d) run in a plane parallel to the rotational axis (1a) at an angle inclined to the rotational axis (1a).

3. Thread cutting device according to claim 1,
**characterised in that**
the outwardly directed guide faces (2d') run inclined to the axis of rotation (1a).

4. Thread cutting device according to one of claims 1 to 3,
**characterised in that**
the first guide faces (2c') and the second guide faces (2d') are formed by the faces of a T-shaped flat guide (2g) which engage round a guide body (3g) which has a rectangular cross section and is connected to the tool slide (3a').

5. Thread cutting device according to one of claims 1 to 4,
**characterised in that**
the first guide faces and the second guide faces are formed by areas of a circular guide (2g') whose rod-like guide body (3g') is connected to the tool slide (3a').

6. Thread cutting device according to one of claims 1 to 5,
**characterised in that**
the first guide faces (2c") and the second guide faces (2d'') are formed by the faces of a dovetail guide (2g") whose guide body (3g'') is connected to the tool slide (3a').

7. Thread cutting device according to one of claims 1 to 6,
**characterised in that**
the first guide faces (2c) and the second guide faces (2d) are formed by opposing flanks of an inclined toothed spline (2a) on the outside of the drive member (2).

8. Thread cutting device according to claim 7,
**characterised in that**
the central drive member (2) is provided on pairs of opposite outer sides with inclined teeth (2a) which engage in the teeth (16a) tangential to the tool revolving path in the thread cutting head (1) whereby the transfer elements (16) have further inclined teeth (16c) opposite the tool slides (3a, 3b) which engage in corresponding teeth (3f) on the tool slides (3a, 3b).

9. Thread cutting device according to one of claims 1 to 8,
**characterised in that**
the tools fixed on the tool slides (3a, 3b) are single or multi cutting thread cutting tools (13) and rotary or peeling tools (14).

10. Thread cutting device according to one of claims 1 to 9,
**characterised in that**
tool slides (3a to 3b) are arranged diametrically oppositely one another on different sides of the axis of rotation (1a) and support similar tools whereby the tool slides (3a) fitted with the thread cutting tools (13) are set adjacent the tool slides (3b) provided with the rotary or peeling tools (14) and off-set in the direction of the axis of rotation (1a) and that the cutters of the rotary or peeling tools (14) lie in the machining direction in front of the cutters of the thread cutting tools (13).

11. Thread cutting device according to one of claims 1 to 10,
**characterised in that**
the tool slides (3a, 3a', 3b) support combined peeling and thread cutting tools (19).

12. Thread cutting device according to one of claims 1 to 11,
**characterised in that**
the central drive member (2) has a central bore (2e).

13. Thread cutting device according to one of claims 1 to 10,
**characterised in that**
the central drive member (2) is axially displaceable by means of a rotary driven internal thread drive (5) which is designed for actuating a tie rod (6) which is mounted in a tool spindle (4) supporting the thread cutting head (1).

14. Thread cutting device according to one of claims 1 to 13,
**characterised in that**
the area of each tool slide (3a; 3a'; 3b) supporting the tool (13b; 14b; 19) is adjustable relative to its guide area.

15. Thread cutting device according to claim 14,
**characterised in that**
the area of the tool slide (3a, 3a', 3b) supporting the tool (13b, 14b, 19) is adjustable by means of an eccentric bolt (18) connecting these areas.

## Revendications

1. Dispositif de filetage avec une tête de filetage (1) qui, rotative et mobile en translation dans le sens de l'axe de rotation (1a), présente quatre coulisseaux à outils (3a; 3a', 3b) disposés deux par deux, vis-à-vis les uns des autres, mobiles en translation dans le sens radial par rapport à l'axe de rotation (1a), lesquels portent les outils, et avec un organe d'entraînement (2; 2'), mobile dans le sens de l'axe de rotation (1a) et en rotation avec la tête de filetage (1), organe d'entraînement (2; 2') dont le mouvement relatif à la tête de filetage (1), dans le sens de l'axe de rotation, conduit à un mouvement radial des coulisseaux porte-outils (3a ; 3b) et lequel présente des surfaces de guidage dont les premières (2c; 2c') assurent le guidage des coulisseaux porte-outils (3a; 3a, 3b) dans une première direction, et les deuxièmes (2d; 2d'), disposées parallèlement, à l'opposé, assurent le guidage des coulisseaux porte-outils (3a; 3a', 3b) dans le sens inverse,
**caractérisé en ce que**
l'organe d'entraînement (2; 2') présente une zone médiane, centrale (2f; 2f') ainsi que des surfaces de guidage (2c; 2c'; 2d; 2d') y afférentes, orientées vers l'extérieur, dans le sens radial, lesquelles sont en prise avec des contre-surfaces orientées vers l'intérieur, par l'intermédiaire desquelles le mouvement de l'organe de commande (2 ; 2') est transmis indirectement ou directement aux coulisseaux porte-outils (3a ; 3a' ; 3b) mobiles en translation dans le sens radial.

2. Dispositif de filetage selon la revendication 1,
**caractérisé en ce que**
les surfaces de guidage dirigées vers l'extérieur (2c ; 2d) sont situées dans un plan parallèle à l'axe de rotation, en formant un angle oblique par rapport audit axe de rotation.

3. Dispositif de filetage selon la revendication 1,
**caractérisé en ce que**
les surfaces de guidage dirigées vers l'extérieur (2d') sont orientées obliquement par rapport à l'axe de rotation (1a).

4. Dispositif de filetage selon l'une des revendications 1 à 3,
**caractérisé en ce que**
les premières surfaces de guidage (2c') et les deuxièmes surfaces de guidage (2d') sont formées par les surfaces d'un guidage plat en forme de T (2g) qui agrippent un corps de guidage (3g) de section transversale rectangulaire, relié au coulisseau porte-outil (3a')

5. Dispositif de filetage selon l'une des revendications 1 à 4,
**caractérisé en ce que**
les premières surfaces de guidage et les deuxièmes surfaces de guidage sont formées par des secteurs d'un guidage rond (2g') dont le corps de guidage (3g') en forme de tige est relié au porte-outil (3a').

6. Dispositif de filetage selon l'une des revendications 1 à 5,
**caractérisé en ce que**
les premières surfaces de guidage (2c") et les deuxièmes surfaces de guidage (2d") sont formées par les surfaces d'un guidage en forme de queue d'aronde (2g") dont le corps de guidage (3g") est relié au coulisseau porte-outil (3a').

7. Dispositif de filetage selon l'une des revendications 1 à 6,
**caractérisé en ce que**
les premières surfaces de guidage (2c) et les deuxièmes surfaces de guidage (2d) sont formées, sur le côté extérieur de l'organe de commande (2), par les flancs opposés d'une denture hélicoïdale (2a).

8. Dispositif de filetage selon la revendication 7,
**caractérisé en ce que**
l'organe de commande central (2) est pourvu, sur les côtés extérieurs, opposés deux par deux, de dentures hélicoïdales (2a) qui entrent en prise avec la denture (16a) d'éléments de translation (16) déplaçables dans la tête de filetage (1), tangentiellement par rapport à la trajectoire des outils, lesdits éléments de translation (16) présentant d'autres dentures hélicoïdales, disposées à l'opposé des dentures hélicoïdales (16), lesquelles entrent en prise avec des dentures correspondantes (3f) qui équipent les porte-outils (3a).

9. Dispositif de filetage selon l'une des revendications 1 à 8,
**caractérisé en ce que**
les outils fixés sur les coulisseaux porte-outils (3a; 3b) sont des outils de filetage à une ou à plusieurs arêtes de coupe (13) et ou des outils de tournage ou d'écroûtage (14).

10. Dispositif de filetage selon l'une des revendications 1 à 9,
**caractérisé en ce que**
des coulisseaux porte-outils (3a resp. 3b), diamétralement opposés, de part et d'autre de l'axe de rotation (1a), portent des outils du même genre, les coulisseaux porte-outils (3a) équipés d'outils de filetage (13) avoisinant les porte-outils 3b), équipés d'outils de tournage et d'écroûtage (14), et étant décalés par rapport à ceux-ci dans le sens de l'axe de rotation (1a), et que les arêtes de coupe des outils de tournage et d'écroûtage (14) sont situées en amont des arêtes de coupe des outils de filetage (13), dans le sens d'usinage.

11. Dispositif de filetage selon l'une des revendications 1 à 10,
**caractérisé en ce que**
les coulisseaux porte-outils (3a; 3a'; 3b) portent des outils d'écroûtage et de filetage combinés.

12. Dispositif de filetage selon l'une des revendications 1 à 11,
**caractérisé en ce que**
l'organe de commande central (2) présente un alésage central (2e).

13. Dispositif de filetage selon l'une des revendications 1 à 10,
**caractérisé en ce que**
l'organe de commande central (2) peut être déplacé dans le sens axial, à l'aide d'un engrenage hélicoïdal à douille filetée (5) entraîné en rotation, qui est conçue pour l'actionnement d'une barre de traction (6) disposée dans une broche porte-outil (4) portant la tête de filetage.

14. Dispositif de filetage selon l'une des revendications 1 à 13,
**caractérisé en ce que**
la zone de chaque coulisseau porte-outil (3a; 3a'; 3b) portant l'outil peut être ajustée par rapport à sa zone de guidage.

15. Dispositif de filetage selon la revendication 4,
**caractérisé en ce que**
la zone du coulisseau porte-outil (3a; 3a'; 3b) portant l'outil peut être ajustée à l'aide d'un boulon d'excentrique (18) reliant ces zones.
